# EUROPEAN PATENT APPLICATION

(11) **EP 4 761 418 A1**
(43) Date of publication of application: **17.06.2026**
(21) Application number: 24853637.7
(22) Date of filing: 07.08.2024
(51) Int. Cl.: H04W 72/12

(54) **HARQ-ACK INFORMATION FEEDBACK METHOD AND APPARATUS, AND HARQ-ACK INFORMATION RECEIVING METHOD AND APPARATUS**

(30) Priority: 11.08.2023 CN 202311022087
(71) Applicant: HUAWEI TECHNOLOGIES CO., LTD., Shenzhen 518129 (CN)
(72) Inventor: GAO, Fei, Shenzhen, Guangdong 518129 (CN); HUANG, Xiuxuan, Shenzhen, Guangdong 518129 (CN); JIAO, Shurong, Shenzhen, Guangdong 518129 (CN); HUA, Meng, Shenzhen, Guangdong 518129 (CN)
(74) Representative: Körber, Martin Hans
(86) International application number: PCT/CN2024/110483
(87) International publication number: WO 2025/036226

(57) **Abstract**

A method for feeding back HARQ-ACK information, a method for receiving HARQ-ACK information, and an apparatus are disclosed, and relate to the field of communication technologies, to reduce a quantity of bits of HARQ-ACK information, improve transmission efficiency of UCI, and save communication resources. The method for feeding back HARQ-ACK information includes: a terminal receives first DCI through a first PDCCH, where the first DCI schedules M PDSCHs, and a format of the first DCI is a DCI format for scheduling PDSCHs of a plurality of cells; and the terminal sends a HARQ-ACK codebook through an uplink channel, where the HARQ-ACK codebook includes HARQ-ACK information corresponding to the first PDCCH. A quantity of bits of the HARQ-ACK information corresponding to the first PDCCH is determined based on a largest quantity of cells in quantities of cells corresponding to all rows in a first table, and each row in the first table indicates cells scheduled in one time of scheduling of DCI in the DCI format.

## Description

This application claims priority to Chinese Patent Application No. 202311022087.8, filed with the China National Intellectual Property Administration on August 11, 2023 and entitled "METHOD FOR FEEDING BACK HARQ-ACK INFORMATION, METHOD FOR RECEIVING HARQ-ACK INFORMATION, AND APPARATUS", which is incorporated herein by reference in its entirety.

### TECHNICAL FIELD

This application relates to the field of communication technologies, and in particular, to a method for feeding back HARQ-ACK information, a method for receiving HARQ-ACK information, and an apparatus.

### BACKGROUND

With continuous emergence of new services such as high-definition video, augmented reality (augmented reality, AR), and virtual reality (virtual reality, VR), wireless data traffic is growing rapidly. To meet growing requirements on wireless transmission, a wireless communication technology needs to further evolve, thereby improving a network capacity and a transmission rate of a wireless network. In an evolution process of the wireless communication technology, how to save communication resources is an urgent technical problem to be resolved.

### SUMMARY

This application provides a method for feeding back HARQ-ACK information, a method for receiving HARQ-ACK information, and an apparatus, to save communication resources.

To achieve the foregoing objectives, embodiments of this application provide the following technical solutions.

According to a first aspect, a method for feeding back HARQ-ACK information is provided, including: receiving first downlink control information DCI through a first physical downlink control channel PDCCH, where the first DCI schedules M physical downlink shared channels PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N; receiving the M PDSCHs; and sending a hybrid automatic repeat request-acknowledgment HARQ-ACK codebook through an uplink channel, where the HARQ-ACK codebook includes HARQ-ACK information corresponding to the first PDCCH, a quantity of bits of the HARQ-ACK information corresponding to the first PDCCH is determined based on a largest quantity of cells in quantities of cells corresponding to all rows in a first table, and each row in the first table indicates cells scheduled in one time of scheduling of DCI in the DCI format.

With reference to the first aspect, in a possible design, the first DCI includes first indication information and second indication information, the first indication information indicates an index of a first cell set, the second indication information indicates an i^{th} row in the first table, the first cell set corresponds to the first table, the cells indicated by each row in the first table are in the first cell set, the i^{th} row indicates L cells, the M PDSCHs are PDSCHs in the L cells, each of the L cells corresponds to at least one of the M PDSCHs, L is a positive integer less than or equal to M, and i is a positive integer. The quantity of bits of the HARQ-ACK information corresponding to the first PDCCH is determined based on a quantity of cells corresponding to a row indicating a largest quantity of cells in the first table. When a part of cells always fail to be scheduled since a table associated with a cell set does not include the part of cells in the cell set, redundant bit positions in the HARQ-ACK codebook can be reduced, so that transmission efficiency of UCI can be improved, and communication resources can be saved.

With reference to the first aspect, in a possible design, locations of HARQ-ACK information corresponding to the M PDSCHs in the HARQ-ACK codebook are sorted in ascending order based on a cell index of a cell corresponding to each of the M PDSCHs. In this way, during decoding, a HARQ-ACK information receive end (for example, a base station) can correctly understand a meaning of each bit position in the HARQ-ACK codebook, thereby successfully decoding the HARQ-ACK codebook.

With reference to the first aspect, in a possible design, a row in the first table indicates all cells in the first cell set. The first DCI may indicate the row to schedule PDSCHs of all the cells in the first cell set, so that the quantity of bits of the HARQ-ACK information corresponding to the first PDCCH may be equal to a quantity of cells in the first cell set. In this way, all the cells in the first cell set may be scheduled, and there is no case in which at least one bit of HARQ-ACK information is always used as a placeholder since one or more cells in the first cell set always fail to be scheduled.

With reference to the first aspect, in a possible design, the method further includes: receiving configuration information, where the configuration information indicates cells included in the first cell set, the configuration information further indicates cells included in a second cell set, the second cell set corresponds to a second table, and cells indicated by each row in the second table are in the second cell set; and the quantity of bits of the HARQ-ACK information corresponding to the first PDCCH is equal to a first value or is equal to the first value multiplied by 2, where the first value is a larger value of the largest quantity of cells in the quantities of cells corresponding to all the rows in the first table and a largest quantity of cells in quantities of cells corresponding to all the rows in the second table.

According to this solution, when a plurality of cell sets are configured for a terminal, HARQ-ACK information corresponding to each PDCCH for scheduling a plurality of cells has a same quantity of bits. When a PDCCH for scheduling a plurality of cells is miss-detected by the terminal, it can be ensured that the terminal and the base station have a same understanding of a total quantity of bits in the HARQ-ACK codebook, so that the base station can correctly understand a meaning of each bit position in the HARQ-ACK codebook, thereby successfully decoding the HARQ-ACK codebook.

According to a second aspect, a method for receiving HARQ-ACK information is provided, including: sending first downlink control information DCI through a first physical downlink control channel PDCCH, where the first DCI schedules M physical downlink shared channels PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N; sending the M PDSCHs; and receiving a hybrid automatic repeat request-acknowledgment HARQ-ACK codebook through an uplink channel, where the HARQ-ACK codebook includes HARQ-ACK information corresponding to the first PDCCH, a quantity of bits of the HARQ-ACK information corresponding to the first PDCCH is determined based on a largest quantity of cells in quantities of cells corresponding to all rows in a first table, and each row in the first table indicates cells scheduled in one time of scheduling of DCI in the DCI format.

With reference to the second aspect, in a possible design, the first DCI includes first indication information and second indication information, the first indication information indicates an index of a first cell set, the second indication information indicates an i^{th} row in the first table, the first cell set corresponds to the first table, the cells indicated by each row in the first table are in the first cell set, the i^{th} row indicates L cells, the M PDSCHs are PDSCHs in the L cells, each of the L cells corresponds to at least one of the M PDSCHs, L is a positive integer less than or equal to M, and i is a positive integer.

With reference to the second aspect, in a possible design, locations of HARQ-ACK information corresponding to the M PDSCHs in the HARQ-ACK codebook are sorted in ascending order based on a cell index of a cell corresponding to each of the M PDSCHs.

With reference to the second aspect, in a possible design, a row in the first table indicates all cells in the first cell set.

With reference to the second aspect, in a possible design, the method further includes: sending configuration information, where the configuration information indicates cells included in the first cell set, the configuration information further indicates cells included in a second cell set, the second cell set corresponds to a second table, and cells indicated by each row in the second table are in the second cell set; and the quantity of bits of the HARQ-ACK information corresponding to the first PDCCH is equal to a first value or is equal to the first value multiplied by 2, where the first value is a larger value of the largest quantity of cells in the quantities of cells corresponding to all the rows in the first table and a largest quantity of cells in quantities of cells corresponding to all the rows in the second table.

Various possible designs of the second aspect have same beneficial effects as those of the first aspect.

According to a third aspect, a method for feeding back HARQ-ACK information is provided, including: receiving first DCI through a first physical downlink control channel PDCCH, where the first DCI schedules M PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N; receiving the M PDSCHs; and sending a HARQ-ACK codebook through an uplink channel, where the HARQ-ACK codebook includes HARQ-ACK information corresponding to the first PDCCH, a quantity of bits of the HARQ-ACK information corresponding to the first PDCCH is determined based on a second value, the second value is a larger value of a quantity of cells in a first cell set and a quantity of cells in a second cell set, and cells scheduled in one time of scheduling of DCI in the DCI format are the cells in the first cell set or the cells in the second cell set. In this solution, when a plurality of cell sets are configured for a terminal, HARQ-ACK information corresponding to each PDCCH for scheduling a plurality of cells has a same quantity of bits. When a PDCCH for scheduling a plurality of cells is miss-detected by the terminal, it can be ensured that the terminal and a base station have a same understanding of a total quantity of bits in the HARQ-ACK codebook, so that the base station can correctly understand a meaning of each bit position in the HARQ-ACK codebook, thereby successfully decoding the HARQ-ACK codebook.

With reference to the third aspect, in a possible design, the first DCI includes first indication information and second indication information, where the first indication information indicates an index of the first cell set, the second indication information indicates L cells in the first cell set, the M PDSCHs are PDSCHs in the L cells, each of the L cells corresponds to at least one of the M PDSCHs, and L is a positive integer less than or equal to M.

With reference to the third aspect, in a possible design, the quantity of cells in the first cell set is different from the quantity of cells in the second cell set.

With reference to the third aspect, in a possible design, the quantity of bits of the HARQ-ACK information corresponding to the first PDCCH is equal to the second value or is equal to the second value multiplied by 2.

With reference to the third aspect, in a possible design, when L is less than the second value, a bit in the bits of the HARQ-ACK information corresponding to the first PDCCH other than bits of HARQ-ACK information corresponding to the M PDSCHs is set to a negative acknowledgment NACK.

With reference to the third aspect, in a possible design, locations of HARQ-ACK information corresponding to the M PDSCHs in the HARQ-ACK codebook are sorted in ascending order based on a cell index of a cell corresponding to each of the M PDSCHs. In this way, during decoding, a HARQ-ACK information receive end (for example, a base station) can correctly understand a meaning of each bit position in the HARQ-ACK codebook, thereby successfully decoding the HARQ-ACK codebook.

According to a fourth aspect, a method for receiving HARQ-ACK information is provided, including: sending first DCI through a first physical downlink control channel PDCCH, where the first DCI schedules M PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N; sending the M PDSCHs; and receiving a HARQ-ACK codebook through an uplink channel, where the HARQ-ACK codebook includes HARQ-ACK information corresponding to the first PDCCH, a quantity of bits of the HARQ-ACK information corresponding to the first PDCCH is determined based on a second value, the second value is a larger value of a quantity of cells in a first cell set and a quantity of cells in a second cell set, and cells scheduled in one time of scheduling of DCI in the DCI format are the cells in the first cell set or the cells in the second cell set. With reference to the fourth aspect, in a possible design, the first DCI includes first indication information and second indication information, where the first indication information indicates an index of the first cell set, the second indication information indicates L cells in the first cell set, the M PDSCHs are PDSCHs in the L cells, each of the L cells corresponds to at least one of the M PDSCHs, and L is a positive integer less than or equal to M.

With reference to the fourth aspect, in a possible design, the quantity of cells in the first cell set is different from the quantity of cells in the second cell set.

With reference to the fourth aspect, in a possible design, the quantity of bits of the HARQ-ACK information corresponding to the first PDCCH is equal to the second value or is equal to the second value multiplied by 2.

With reference to the fourth aspect, in a possible design, when L is less than the second value, a bit in the bits of the HARQ-ACK information corresponding to the first PDCCH other than bits of HARQ-ACK information corresponding to the M PDSCHs is set to a negative acknowledgment NACK.

With reference to the fourth aspect, in a possible design, locations of the HARQ-ACK information corresponding to the M PDSCHs in the HARQ-ACK codebook are sorted in ascending order based on a cell index of a cell corresponding to each of the M PDSCHs. In this way, during decoding, a HARQ-ACK information receive end (for example, a base station) can correctly understand a meaning of each bit position in the HARQ-ACK codebook, thereby successfully decoding the HARQ-ACK codebook. Various possible designs of the fourth aspect have same beneficial effects as those of the third aspect.

According to a fifth aspect, a communication apparatus is provided. The communication apparatus is configured to implement the foregoing method for feeding back HARQ-ACK information or the foregoing method for receiving HARQ-ACK information. The communication apparatus includes a corresponding module, unit, or means (means) for implementing the foregoing method for feeding back HARQ-ACK information. The module, unit, or means may be implemented by hardware, software, or hardware executing corresponding software. The hardware or the software includes one or more modules or units corresponding to the foregoing functions.

According to a sixth aspect, a communication apparatus is provided. The communication apparatus includes a processor and a memory, where the memory is configured to store computer instructions; and when the processor executes the instructions, the communication apparatus is caused to perform the method for feeding back HARQ-ACK information or the method for receiving HARQ-ACK information in any one of the foregoing aspects.

According to a seventh aspect, a communication apparatus is provided, including a processor, where the processor is coupled to a memory, and the processor is configured to read and execute instructions in the memory, so that the communication apparatus is caused to perform the method for feeding back HARQ-ACK information or the method for receiving HARQ-ACK information in any one of the foregoing aspects.

According to an eighth aspect, a chip system is provided. The chip system includes a processor and an input/output port, where the processor is configured to implement a processing function related to a hybrid automatic repeat request-acknowledgment information transmission method in any one of the foregoing aspects, and the input/output port is configured to implement a transceiver function related to the method for feeding back HARQ-ACK information in any one of the foregoing aspects, or a transceiver function related to the method for receiving HARQ-ACK information in any one of the foregoing aspects.

In a possible design, the chip system further includes a memory, where the memory is configured to store program instructions and data for implementing a function related to the method for feeding back HARQ-ACK information in any one of the foregoing aspects, or program instructions and data for implementing a function related to the method for receiving HARQ-ACK information in any one of the foregoing aspects.

The chip system may include a chip, or may include a chip and another discrete device.

According to a ninth aspect, a communication system is provided. The system includes one or more terminal devices and a network device, where the terminal device performs the method for feeding back HARQ-ACK information in any one of the foregoing aspects, and the network device performs the method for receiving HARQ-ACK information in any one of the foregoing aspects.

According to a tenth aspect, a computer-readable storage medium is provided. The computer-readable storage medium stores computer instructions; and when the computer instructions are run on a computer, the computer is caused to perform the method for feeding back HARQ-ACK information according to any design of the foregoing aspects, or the computer is caused to perform the method for receiving HARQ-ACK information according to any design of the foregoing aspects.

According to an eleventh aspect, a computer program product is provided. The computer program product includes a computer program or instructions; and when the computer program or the instructions are run on a computer, the computer is caused to perform the method for feeding back HARQ-ACK information according to any design of the foregoing aspects, or the computer is caused to perform the method for receiving HARQ-ACK information according to any design of the foregoing aspects.

### BRIEF DESCRIPTION OF DRAWINGS

FIG. 1 is a diagram of an architecture of a communication system to which an embodiment of this application is applied;
FIG. 2 is a diagram of a self-carrier scheduling scenario according to an embodiment of this application;
FIG. 3 is a diagram of a cross-carrier scheduling scenario according to an embodiment of this application;
FIG. 4 is a diagram of a single DCI multicarrier scheduling scenario according to an embodiment of this application;
FIG. 5 is a diagram of a cell set according to an embodiment of this application;
FIG. 6 is a diagram of another cell set according to an embodiment of this application;
FIG. 7 is a diagram of a structure of a HARQ-ACK codebook according to an embodiment of this application;
FIG. 8 is a schematic flowchart of a method for feeding back and receiving HARQ-ACK information according to an embodiment of this application;
FIG. 9 is a diagram of a HARQ-ACK codebook according to an embodiment of this application;
FIG. 10 is a diagram of another HARQ-ACK codebook according to an embodiment of this application;
FIG. 11 is a diagram of another cell set according to an embodiment of this application;
FIG. 12 is a diagram of still another HARQ-ACK codebook according to an embodiment of this application;
FIG. 13 is a diagram of another HARQ-ACK codebook according to an embodiment of this application;
FIG. 14 is a diagram of another HARQ-ACK codebook according to an embodiment of this application;
FIG. 15 is a schematic flowchart of another method for feeding back and receiving HARQ-ACK information according to an embodiment of this application;
FIG. 16 is a diagram of another HARQ-ACK codebook according to an embodiment of this application;
FIG. 17 is a diagram of another HARQ-ACK codebook according to an embodiment of this application;
FIG. 18 is a diagram of a structure of a communication apparatus according to an embodiment of this application; and
FIG. 19 is a diagram of a structure of another communication apparatus according to an embodiment of this application.

### DESCRIPTION OF EMBODIMENTS

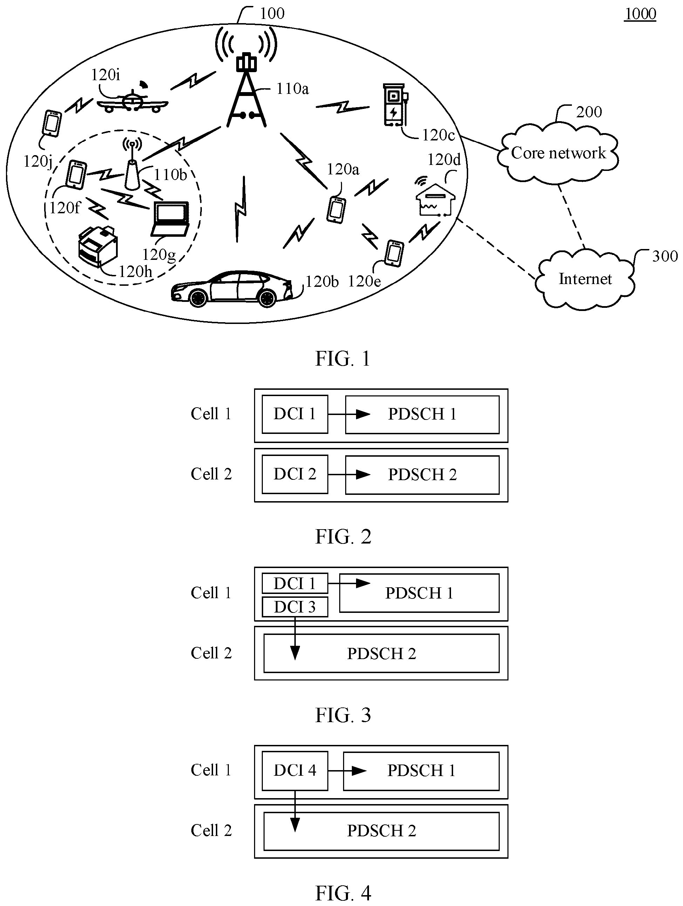

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner, and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, a network device, or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), or may be a micro base station or an indoor base station (for example, 110b in FIG. 1), or may be a relay node or a donor node.

In another application scenario, a plurality of RAN nodes may cooperate to help the terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in the 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented through a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which a base station is used as the RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, remote medical, smart grid, smart furniture, smart office, smart wearable, smart transportation, and smart city. The terminal may be a mobile phone, a tablet, a computer with a wireless transceiver function, a wearable device, a vehicle, an airplane, a ship, a robot, a mechanical arm, a smart home device, or the like. A specific technology and a specific device form that are used by the terminal are not limited in embodiments of this application.

The base station and the terminal may be located at fixed positions, or may be mobile. The base station and the terminal may be deployed on land, including an indoor or outdoor device, or a handheld or vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an unmanned aerial vehicle 120i in FIG. 1 may be configured as a mobile base station. For the terminal 120j accessing the radio access network 100 through 120i, the terminal 120i is a base station, while for the base station 110a, 120i is a terminal. In other words, communication between 110a and 120i is performed according to a wireless air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a base station function, and 120a to 120j each in FIG. 1 may be referred to as a communication apparatus having a terminal function.

Communication between the base station and the terminal, between base stations, or between terminals may be performed through a licensed spectrum, or may be performed through an unlicensed spectrum, or may be performed through both the licensed spectrum and the unlicensed spectrum. Communication may be performed through a spectrum below 6 gigahertz (gigahertz, GHz), or may be performed through a spectrum above 6 GHz, or may be simultaneously performed through the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the base station function. The control subsystem including the base station function herein may be a control center in the foregoing application scenarios such as smart grid, industrial control, smart transportation, and smart city. A function of the terminal may be performed by a module (for example, a chip or a modem) in the terminal, or may be performed by an apparatus including the terminal function.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered with by a signal from a neighboring cell.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical uplink control channel (physical uplink control channel, PUCCH) are merely examples of a downlink data channel, a downlink control channel, an uplink data channel, and an uplink control channel. In different systems and different scenarios, a data channel and a control channel may have different names. This is not limited in embodiments of this application.

First, some terms in embodiments of this application are described for ease of understanding by a person skilled in the art.

### 1. Cell and carrier

The cell is a group of resource sets managed by a base station, including a frequency domain resource and a space domain resource. The frequency domain resource includes an uplink frequency domain resource and/or a downlink frequency domain resource. The space domain resource may be a space domain resource corresponding to one beam or a group of beams. A cell can be identified by a cell global identity. The uplink frequency domain resource of a cell is also referred to as an uplink carrier, and a downlink frequency domain resource of a cell is also referred to as a downlink carrier. In a time division duplex scenario, frequency domain resources corresponding to the uplink carrier and the downlink carrier of the cell are the same. In a frequency division duplex scenario, frequency domain resources corresponding to the uplink carrier and the downlink carrier of the cell are different. In embodiments of this application, if there is no logical conflict, the technical terms "cell" and "carrier" may be used interchangeably.

### 2. Carrier aggregation

A carrier aggregation (carrier aggregation, CA) technology is a key technology to resolve a problem of a limited bandwidth of a single carrier. The CA technology may aggregate two or more component carrier (component carriers, CCs) of different frequency bands together through a discrete multitone technology, and each component carrier is used as a subcarrier. In the carrier aggregation technology, a plurality of subcarriers may be used to transmit data or information simultaneously, thereby increasing a transmission bandwidth of a communication system and improving a data transmission rate.

In a non-carrier aggregation scenario, generally, a terminal device is connected to only one cell, that is, the cell may be considered as a unique serving cell (serving cell) of the terminal device.

In a carrier aggregation scenario, a terminal device may be connected to a plurality of cells, which may also be understood as that the terminal device may use resources of the plurality of cells for communication. In the plurality of cells connected to the terminal device, a cell that initiates initial access is referred to as a primary cell (primary cell, PCell), or may be referred to as a primary carrier. The PCell is used to establish a radio resource control (radio resource control, RRC) connection between the terminal device and a network. Based on a transmission requirement of the terminal device, the network may configure a secondary cell (secondary cell, SCell) for the terminal device, to provide an additional transmission resource. A base station may configure the secondary cell by sending RRC signaling through the primary cell, or transmit configuration information of the secondary cell to the terminal device through medium access control control element (medium access control control element, MAC CE) signaling or downlink control information (downlink control information, DCI) signaling, to activate or deactivate the secondary cell.

### 3. Self-carrier scheduling and cross-carrier scheduling

In a CA scenario, a base station may send a plurality of pieces of DCI to a terminal device, to schedule PDSCHs on a plurality of cells. Each piece of DCI schedules a PDSCH on a cell. Based on whether a cell in which the DCI is located and the cell in which the PDSCH scheduled by the DCI is located are located in a same cell, two manners may be included: self-carrier scheduling and cross-carrier scheduling.

As shown in FIG. 2, the self-carrier scheduling manner indicates that a resource carrying DCI and a resource carrying a PDSCH scheduled by the DCI are placed on a same carrier. From a perspective of a base station, the DCI and the PDSCH scheduled by the DCI are sent on a same carrier; and from a perspective of a terminal device, the DCI and the PDSCH scheduled by the DCI are received on a same carrier. As shown in FIG. 2, two cells, namely, a cell 1 and a cell 2, are configured for a terminal device. For the two cells, the base station may perform data transmission in the self-carrier scheduling manner configured through an RRC parameter. For example, the base station sends DCI 1 on the cell 1, and the DCI 1 is used to schedule a PDSCH 1 of the cell 1. The base station sends DCI 2 on the cell 2, and the DCI 2 is used to schedule a PDSCH 2 of the cell 2.

The cross-carrier scheduling manner indicates that DCI for scheduling a resource of a cell is sent on another cell, that is, a resource carrying DCI and a resource carrying a PDSCH scheduled by the DCI do not belong to a same cell. As shown in FIG. 3, a base station may schedule data of a cell 2 in the cross-carrier scheduling manner configured through an RRC parameter. For example, the base station sends DCI 3 on a cell 1, and the DCI 3 is used to schedule a PDSCH 2 of the cell 2. The base station may further send, on the cell 1, DCI 1 used for scheduling a PDSCH 1 of the cell 1.

The DCI used in the self-carrier scheduling manner and the cross-carrier scheduling manner may be referred to as legacy DCI (legacy DCI), and a format (format) of the legacy DCI includes a DCI format 0_0/1_0/0_1/1_1/0_2/1_2. When data of a cell is scheduled by using the legacy DCI, a quantity of required pieces of legacy DCI is the same as a quantity of cells scheduled by the base station. When the base station schedules a PDSCH through a plurality of pieces of legacy DCI, user equipment needs to blindly detect the plurality of pieces of legacy DCI. Resources consumed by the terminal device for blindly detecting the legacy DCI increase as a quantity of carriers increases.

### 4. Single DCI (single DCI) multicarrier scheduling

The single DCI multicarrier scheduling manner indicates that PDSCHs on a plurality of carriers are scheduled by using single DCI. As shown in FIG. 4, a base station schedules resources of a cell 1 and a cell 2 in the single DCI multicarrier scheduling manner. For example, the base station sends DCI 4 on the cell 1, and the DCI 4 is used to schedule a PDSCH 1 of the cell 1 and a PDSCH 2 of the cell 2.

The single DCI has a plurality of formats. Each format may be used to schedule data channels of a plurality of cells, and each format may also be used to schedule a data channel of one cell. A format of single DCI used to schedule an uplink cell data channel may be a DCI format 0_3, and a format of single DCI used to schedule a downlink cell data channel may be a DCI format 1_3. The DCI format 0_3/1_3 may be used to schedule one PUSCH/PDSCH of one cell, or to schedule a plurality of PUSCHs/PDSCHs of the plurality of cells, where each cell has only one PUSCH/PDSCH.

Compared with a manner in which PDSCHs are scheduled by using a plurality of pieces of DCI in a CA mechanism, in this manner, when the base station schedules data on a plurality of carriers by using single DCI, the single DCI may be carried on only one of the carriers. Compared with the self-carrier scheduling manner and the cross-carrier scheduling manner, in the single DCI multicarrier scheduling manner, the base station may schedule data on a plurality of carriers by sending one piece of DCI, thereby reducing overheads of a control channel, releasing more downlink resources for PDSCH transmission, and improving a downlink transmission capacity.

### 5. Cell set and co-scheduled cell combination table

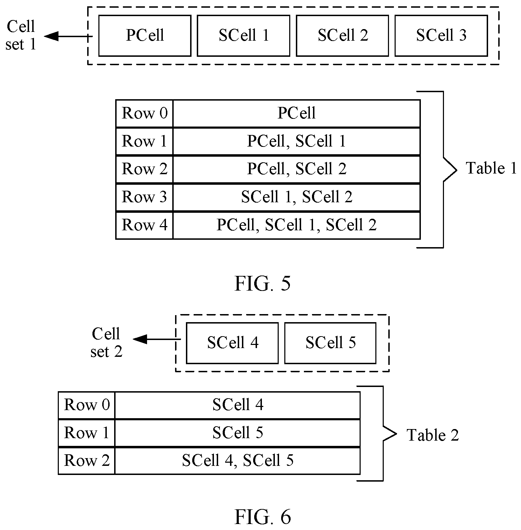

In a carrier aggregation scenario, when a base station configures UE to monitor single DCI, the base station may configure one or more cell sets (cell set) for the UE through a higher layer parameter (for example, MC-DCI-SetofCells). One cell set may include a plurality of cells that provide a wireless connection for a terminal device. The base station may send information to the terminal device through a cell in the cell set, or receive information sent by the terminal device. As shown in FIG. 5, a cell set 1 (cell set 1) of the terminal device includes four cells: a PCell, an SCell 1, an SCell 2, and an SCell 3. The base station may send data to the terminal device through the PCell, the SCell 1, the SCell 2, and the SCell 3.

In the carrier aggregation scenario, the base station may configure one or more cell sets for the terminal device. Each cell set may include a maximum of four cells, so that the terminal can perform communication through a plurality of cells (or referred to as carriers). For example, the base station configures two cell sets and six cells for the terminal device. The cell set 1 shown in FIG. 5 includes four cells, a cell set 2 (cell set 2) shown in FIG. 6 includes two cells, and the cell set 2 includes a cell 4 (SCell 4) and a cell 5 (SCell 5).

Each cell set may correspond to a co-scheduled cell combination table, which may be briefly referred to as a table. In embodiments of this application, the table may be implemented in a plurality of manners such as a list, an array, and the like. For example, the list may include one or more rows (rows), where the row may also be referred to as an entry (entry). Each row indicates one or more cells. The base station may indicate, through a scheduled cell set indicator field (scheduled cell set indicator field) in DCI, to send data to the terminal device on at least one cell included in the cell set 1. Then, the base station indicates any row in the table through a scheduled cell indicator field (scheduled cell indicator field) in the DCI, and indicates, by indicating the row, the terminal device to receive the date on cells included in the row. Each row may include a cell index (cell index) of each cell.

As shown in FIG. 5, a row 0 includes the cell PCell, a row 1 includes the cell PCell and the cell SCell 1, a row 2 includes the cell PCell and the cell SCell 2, a row 3 includes the cell SCell 1 and the cell SCell 2, and a row 4 includes the cell PCell, the cell SCell 1, and the cell SCell 2. The base station may transmit information to the terminal device by indicating the cells (for example, the cell SCell 1 and the cell SCell 2 in the "row 3") in each row in the table. Data is transmitted through a plurality of carriers, so that a data transmission throughput can be increased and a transmission rate can be improved.

For another example, the table is implemented as a plurality of arrays, and each array includes cell indexes of cells that can be scheduled at a time in the cell set. For example, a table corresponding to the cell set shown in FIG. 6 may be represented in an array form as [SCell 4], [SCell 5], and [SCell 4, SCell 5].

### 6. HARQ-ACK information

In a single DCI multicarrier scheduling scenario, a base station may send DCI to a terminal device, and the DCI is used to schedule PDSCHs on a plurality of cells. The terminal device may feed back hybrid automatic repeat request-acknowledgment (hybrid automatic repeat request-acknowledgment, HARQ-ACK) information to the base station based on a receiving or decoding status of a PDSCH.

The HARQ-ACK information may be sent to the base station through a PUCCH or a PUSCH. In this way, the base station may know, through the HARQ-ACK information, whether a transport block (transport block, TB) carried on the PDSCH is successfully decoded. If the TB is successfully decoded, the terminal device feeds back an acknowledgment (acknowledgement, ACK). If the TB is not successfully decoded, the terminal device does not receive the DCI for scheduling the PDSCH, or the terminal device does not receive the PDSCH scheduled by the DCI. In this way, the terminal device feeds back a negative acknowledgment (negative acknowledgement, NACK), and the HARQ-ACK information for each PDSCH occupies one bit.

For example, in the single DCI multicarrier scheduling manner shown in FIG. 4, assuming that a transport block carried on the PDSCH 1 is successfully decoded, the terminal device may feed back an ACK for the PDSCH 1 to the base station. Assuming that a transport block carried on the PDSCH 2 is not successfully decoded, the terminal device may feed back a NACK for the PDSCH 2 to the base station. Therefore, the HARQ-ACK information sent by the terminal device to the base station may be represented as {ACK, NACK}.

A HARQ-ACK codebook may be formed by cascading HARQ-ACK information, and the HARQ-ACK codebook may include HARQ-ACK information fed back for PDSCHs scheduled by one or more pieces of DCI.

The DCI sent by the base station to the terminal device may indicate a resource (for example, a time-frequency resource) of the HARQ-ACK information fed back by the terminal device for the DCI. HARQ-ACK information with a same resource may be fed back to the base station in a same HARQ-ACK codebook.

For example, the base station sends DCI 1, DCI 2, and DCI 3 to the terminal device. If the base station indicates that PUCCHs or PUSCHs for feeding back HARQ-ACK information by the terminal device for the DCI 1, the DCI 2, and the DCI 3 are the same, that is, time-frequency resources for feeding back HARQ-ACKs are all a time-frequency resource 1, time-frequency resources for feeding back HARQ-ACK information by the terminal device for PDSCHs scheduled by the DCI 1, the DCI 2, and the DCI 3 are the same. The HARQ-ACK information fed back by the terminal device for the PDSCHs scheduled by the DCI 1, the DCI 2, and the DCI 3 may be located in a same HARQ-ACK codebook.

If the base station indicates that time-frequency resources for feeding back HARQ-ACK information by the terminal device for PDSCHs scheduled by the DCI 1, the DCI 2, and the DCI 3 are a time-frequency resource 1, a time-frequency resource 2, and a time-frequency resource 3 respectively, the time-frequency resources for feeding back the HARQ-ACK information by the terminal device for the PDSCHs scheduled by the DCI 1, the DCI 2, and the DCI 3 are different. The HARQ-ACK information fed back by the terminal device for the PDSCHs scheduled by the DCI 1, the DCI 2, and the DCI 3 is located in different HARQ-ACK codebooks.

It may be understood that the base station may configure a search space set (for example, UE-specific search space (UE-specific search space, USS)) of single DCI monitored by the terminal device. The terminal device obtains the single DCI sent by the base station in the search space set by performing an operation, for example, blind detection or monitoring. A quantity of bits of a dynamic HARQ-ACK codebook fed back by the terminal device for a PDSCH on a cell scheduled by the single DCI may be determined by a quantity of cells scheduled by the single DCI.

When a HARQ-ACK codebook includes HARQ-ACK information fed back for PDSCHs scheduled by a plurality of pieces of DCI, the quantity of bits of the HARQ-ACK codebook is determined by a quantity of PDSCHs scheduled by the plurality of pieces of DCI. If the plurality of pieces of DCI schedule W (W is a positive integer) PDSCHs in total, a quantity of bits of HARQ-ACK information corresponding to the W PDSCHs is W, and the W-bit HARQ-ACK information may be carried in the HARQ-ACK codebook. The quantity of bits occupied by the HARQ-ACK codebook is related to a quantity of pieces of DCI, and is dynamically changed. The HARQ-ACK codebook with changing quantity of occupied bits is referred to as a dynamic HARQ-ACK codebook. In the 3rd generation partnership project (3rd generation partnership project, 3GPP) protocol, the HARQ-ACK codebook with changing quantity of occupied bits is also referred to as a type-2 HARQ-ACK codebook (type-2 HARQ-ACK codebook).

Because the quantity of bits of the dynamic HARQ-ACK codebook is determined by a quantity of PDSCHs scheduled by one or more pieces of DCI, if the terminal device does not detect the DCI sent by the base station, an understanding of the terminal device on the quantity of PDSCHs scheduled by the base station is also affected. Consequently, the base station and the terminal device have different understandings of the HARQ-ACK codebook. For example, still as shown in FIG. 5, the base station sends three pieces of DCI, where DCI 1 is used to schedule one PDSCH on one cell indicated by the "row 0", DCI 2 is used to schedule two PDSCHs on two cells indicated by the "row 1", and DCI 3 is used to schedule PDSCHs on three cells indicated by the "row 4". However, the DCI 2 is miss-detected by the terminal device. The base station determines a quantity of bits of a codebook based on a quantity (6) of PDSCHs scheduled by the DCI 1, the DCI 2, and the DCI 3 in total. However, the terminal device only receives the DCI 1 and the DCI 3, and determines the quantity of bits of the codebook based on a quantity (4) of PDSCHs scheduled by the DCI 1 and the DCI 3. Consequently, the base station and the terminal device have different understandings of the quantity of bits of the codebook.

### 7. DAI mechanism

To ensure consistency of understandings of a HARQ-ACK codebook by a base station and a terminal device, the downlink assignment index (downlink assignment index, DAI) mechanism is proposed in a related technology. A DAI includes a counter downlink assignment index (counter downlink assignment index, counter DAI), where the counter DAI may also be briefly referred to as a c-DAI, and the c-DAI represents an accumulative quantity of {serving cell, PDCCH monitoring occasion}-pair(s) ({serving cell, PDCCH monitoring occasion}-pair(s)) until a current serving cell and a current PDCCH monitoring occasion (monitoring occasion, MO).

In a carrier aggregation scenario, that is, in a scenario in which a quantity of cells configured by the base station for the terminal is greater than 1, the DAI further includes a total downlink assignment index (total downlink assignment index, total DAI), where the total DAI may also be briefly referred to as a t-DAI, and the t-DAI represents a total quantity of {serving cell, PDCCH monitoring occasion}-pair(s) until the current PDCCH monitoring occasion. The t-DAI is updated when the PDCCH MO is updated. For more detailed descriptions of the c-DAI and the t-DAI, refer to related descriptions in the 3GPP technical specification (technical specification, TS) 38.213 V17.6.0.

When the DAI mechanism is used, the DCI may carry the c-DAI and the t-DAI. When the DCI 2 is lost, the terminal device may deduce, based on a c-DAI and a t-DAI of the DCI 1 and a c-DAI and a t-DAI of the DCI 3, that the base station further sends the DCI 2 between sending the DCI 1 and sending the DCI 3. Therefore, when feeding back the HARQ-ACK information for the DCI 1 and the DCI 3, the terminal device reserves, in the HARQ-ACK codebook, a location of the HARQ-ACK information for the DCI 2. For example, a HARQ-ACK codebook fed back for the PDSCHs scheduled by the DCI 1, the DCI 2, and the DCI 3 may be {ACK, ACK, NACK, NACK, ACK, ACK}. Therefore, when receiving the HARQ-ACK codebook fed back by the terminal device, the base station can obtain the HARQ-ACK information for the PDSCHs scheduled by all the DCI sent by the base station, thereby implementing a consistent understanding of the codebook by the terminal device and the base station.

### 8. Dynamic HARQ-ACK codebook fed back for a PDSCH scheduled by single DCI

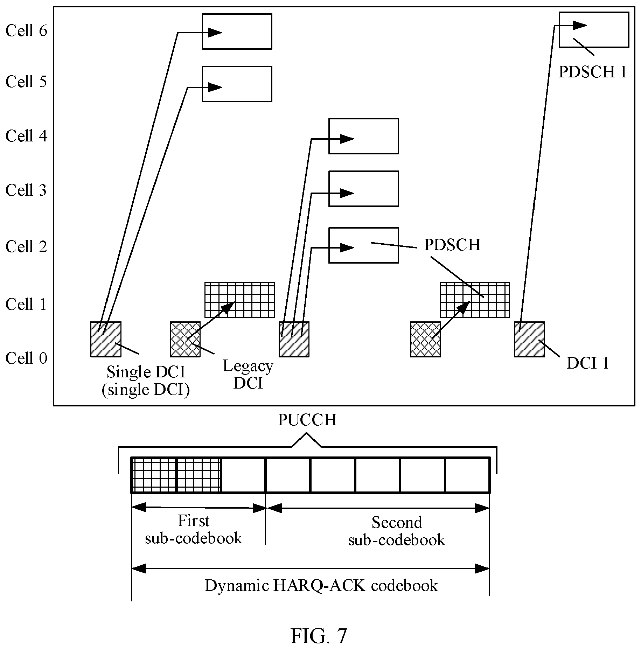

When HARQ-ACK information in a HARQ-ACK codebook includes HARQ-ACK information fed back for a PDSCH scheduled by single DCI, the HARQ-ACK codebook may include a first sub-codebook and a second sub-codebook. As shown in FIG. 7, the first sub-codebook includes HARQ-ACK information for scheduling a PDSCH on one cell, the second sub-codebook includes HARQ-ACK information for scheduling PDSCHs on more than one cell, and a dynamic HARQ-ACK codebook is formed by cascading the first sub-codebook and the second sub-codebook together.

It should be noted that, the single DCI may schedule a PDSCH of one cell, or may schedule PDSCHs of a plurality of cells. When the single DCI schedules a PDSCH of one cell, corresponding HARQ-ACK information belongs to the first sub-codebook. When the single DCI schedules PDSCHs of more than one cell, HARQ-ACK information corresponding to the cells scheduled by the DCI belongs to the second sub-codebook. For example, in FIG. 7, DCI 1 for scheduling a cell 6 is single DCI. The DCI 1 schedules only a PDSCH 1 of the cell 6, and HARQ-ACK information fed back by the terminal for the PDSCH 1 is located in the first sub-codebook. Single DCI in FIG. 7 other than the DCI 1 schedules two or more cells, and HARQ-ACK information fed back by the terminal for PDSCHs scheduled by the single DCI other than the DCI 1 is located in the second sub-codebook.

In some embodiments, all DCI is sent on a primary scheduling cell. Still as shown in FIG. 7, a cell 0 is a primary scheduling cell. For example, cells scheduled by the base station at a time include a cell 5 and a cell 6 shown in FIG. 7, the cell 0 is the primary scheduling cell, and the single DCI is carried in the cell 0. Similarly, cells scheduled by the base station at a time include a cell 2, a cell 3, and a cell 4 shown in FIG. 7, the cell 0 is the primary scheduling cell, and the single DCI is carried in the cell 0.

In a scenario in which a cell set corresponds to a table shown in FIG. 5, each time the base station sends scheduling information to the terminal device, the base station may indicate a row in the table through indication information (for example, the scheduled cell indicator field) in the DCI, to indicate to perform information transmission by using a resource of a cell corresponding to the row. When a largest quantity of cells in quantities of cells corresponding to all rows in the table is less than a quantity of cells in the cell set, the terminal and the base station may understand the quantity of cells in the cell set as the largest quantity of cells, or may understand the largest quantity of cells in the quantities of cells corresponding to all the rows in the table as the largest quantity of cells. When the terminal and the base station understand the quantity of cells in the cell set as the largest quantity of cells, in the HARQ-ACK information fed back by the terminal device each time for a PDSCH scheduled by the DCI, there is a placeholder (indicating a HARQ-ACK information bit position of an unreceived PDSCH) in HARQ-ACK information bit positions, causing an increase in uplink control information (uplink control information, UCI) resource overheads and low resource utilization. For example, refer to FIG. 5. A row corresponding to the largest quantity of cells in the quantities of cells corresponding to all the rows in table 1 is the "row 4", a quantity of cells corresponding to the "row 4" is 3, and a quantity of cells in the cell set 1 is 4. When the terminal device determines, based on the quantity of cells corresponding to the cell set 1, that the HARQ-ACK information fed back for a PDSCH scheduled by one piece of DCI occupies four bits, regardless of which row from the "row 0" to the "row 4" is scheduled by the DCI, a placeholder exists in the scheduled row, causing a waste of UCI resources.

An embodiment of this application provides a method for feeding back and receiving HARQ-ACK information, so that a quantity of bits of HARQ-ACK information can be determined based on a quantity of cells corresponding to a row indicating a largest quantity of cells in a table, thereby saving communication resources.

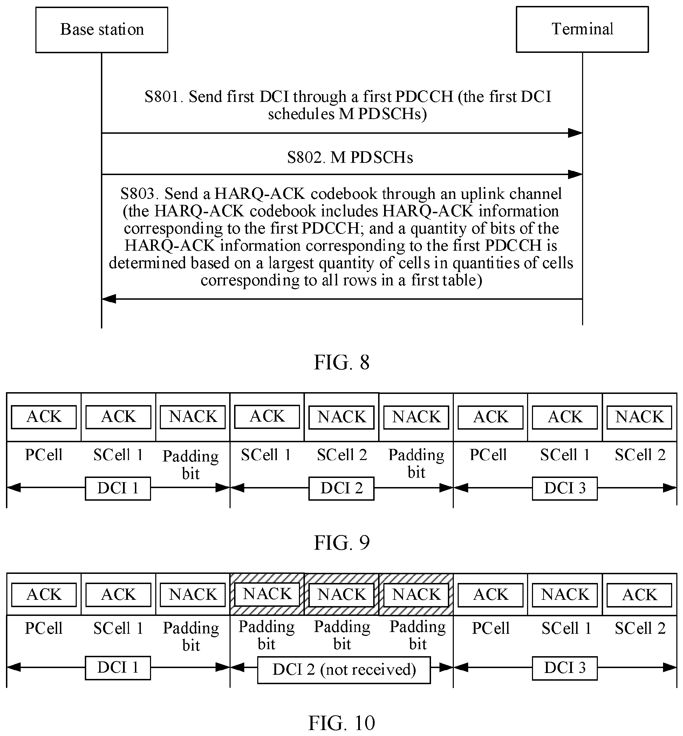

The following uses a base station and a terminal as an example to describe a process of feeding back and receiving HARQ-ACK information provided in an embodiment of this application. Refer to FIG. 8. The process includes the following steps.

S801. The base station sends first DCI through a first PDCCH. Correspondingly, the terminal receives the first DCI through the first PDCCH.

The first DCI schedules M PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N. M is a quantity of PDSCHs that are actually scheduled by the first DCI, N is a quantity of cells that can be scheduled by the first DCI, and K is a quantity of PDSCHs that can be scheduled by the first DCI.

Optionally, the first DCI may be single DCI, and the first DCI may schedule PDSCHs on a plurality of cells at a time.

Optionally, the format of the first DCI may be a DCI format 1_3. The DCI format 1_3 may be used to schedule the K PDSCHs of the N cells.

A cell set configured by the base station for the terminal may include the cell set 1 shown in FIG. 5. Optionally, the cells actually scheduled by the single DCI may be determined by indication information of the single DCI and a table corresponding to the cell set 1. For example, the base station may configure a terminal table (for example, configure a first table for the cell set 1) through a higher layer parameter (for example, an RRC parameter ScheduledCellCombo-ListDCI-1-3), so that the table is associated with a cell set corresponding to the table.

For example, the base station may send single DCI in the format 1_3 (an example of the first DCI) to the terminal, where the single DCI may schedule the four cells in the cell set 1, that is, N=4. If one PDSCH is sent on one cell, a total quantity K of PDSCHs that can be scheduled on the four cells is 4.

Still as shown in FIG. 5, the base station actually indicates, in the single DCI, the "row 3" in the table, that is, indicates to send PDSCHs to the terminal device on the cell SCell 1 and the cell SCell 2. If one PDSCH is sent on one cell, that is, one cell corresponds to one of the K PDSCHs, a total quantity M of PDSCHs actually scheduled by the base station on the two cells is 2. Correspondingly, the terminal receives corresponding PDSCHs on the SCell 1 and the SCell 2.

For example, M=12, N=4, and K=16. In a scenario in which the base station repeatedly sends a PDSCH, the base station may repeatedly send the PDSCH L times on one cell. In other words, the base station sends L same PDSCHs on one cell, where L is a positive integer greater than 1. If the terminal receives any one of the L PDSCHs, it is considered that the terminal receives the PDSCH. In this embodiment of this application, L=4 is used as an example, and the base station sends four PDSCHs on each cell. Refer to FIG. 5, the cell set configured by the base station for the terminal includes the cell set 1, and the cell set 1 includes four cells. The single DCI sent by the base station to the terminal may indicate all cells in the cell set. In this case, the base station may send four PDSCHs to the terminal on each of all the cells, so that the base station sends 16 PDSCHs to the terminal in total. The base station may actually send the single DCI in the format 1_3 to the terminal, where the single DCI indicates the "row 4" in the table, that is, indicates three cells: the PCell, the SCell 1, and the SCell 2. The base station sends PDSCHs to the terminal device on the three cells indicated by the "row 4" in the table, where four PDSCHs are sent on each of the three cells, so that the base station sends 12 PDSCHs to the terminal in total.

S802. The base station sends the M PDSCHs. Correspondingly, the terminal receives the M PDSCHs.

It may be understood that, in some embodiments, the terminal may not receive the M PDSCHs, or the terminal may receive R PDSCHs, where R is a positive integer less than M.

S803. The terminal sends a HARQ-ACK codebook through an uplink channel. Correspondingly, the base station receives the HARQ-ACK codebook through the uplink channel.

The HARQ-ACK codebook includes HARQ-ACK information corresponding to the first PDCCH, where a quantity of bits of the HARQ-ACK information corresponding to the first PDCCH is determined based on a largest quantity of cells in quantities of cells corresponding to all rows in the first table, and each row in the first table indicates cells scheduled in one time of scheduling of DCI in the foregoing DCI format.

For example, the uplink channel may be a PUCCH or a PUSCH.

For example, the table configured by the base station for the terminal includes the table 1 (an example of the first table) shown in FIG. 5. The table 1 may include the row 0 to the row 4. The DCI may schedule a cell indicated by any row in the table 1 at a time. It can be learned that the "row 0" in the table 1 indicates one cell scheduled in one time of scheduling of the single DCI. Similarly, the "row 1" in the table 1 indicates two cells scheduled in one time of scheduling of the single DCI. The "row 2" in the table 1 indicates two cells scheduled in one time of scheduling of the single DCI. The "row 3" in the table 1 indicates two cells scheduled in one time of scheduling of the single DCI. The "row 4" in the table 1 indicates three cells scheduled in one time of scheduling of the single DCI. When the first DCI schedules the cell PCell indicated by the row 0, the terminal device needs to feed back HARQ-ACK information for receiving a PDSCH on the PCell. The rest is deduced by analogy. When the DCI schedules cells indicated by the row 4, the terminal device needs to feed back HARQ-ACK information for receiving a PDSCH on the PCell, receiving a PDSCH on the SCell 1, and receiving a PDSCH on the SCell 2.

In this embodiment of this application, the terminal may determine, based on the maximum quantity of the cells in the quantity of cells corresponding to each row in the first table, the quantity of bits of the HARQ-ACK information corresponding to the first PDCCH.

The HARQ-ACK information corresponding to the first PDCCH may also be understood as HARQ-ACK information corresponding to the first DCI. The HARQ-ACK information corresponding to the first DCI includes HARQ-ACK information corresponding to the M PDSCHs scheduled by the first DCI. In addition to the HARQ-ACK information corresponding to the M PDSCHs, the HARQ-ACK information corresponding to the first DCI may further include a padding bit.

In some embodiments, the quantity of bits of the HARQ-ACK information corresponding to the first PDCCH is the same as the largest quantity of cells.

For example, when the base station configures, through an RRC parameter (for example, maxNrofCodeWordsScheduledByDCI), that a maximum quantity of codewords (codewords) that can be transmitted by each cell in a first cell set is 1, the quantity of bits of the HARQ-ACK information corresponding to the first PDCCH is the same as the largest quantity of cells in the quantities of cells corresponding to all the rows in the first table.

For example, as shown in FIG. 5, the quantities of cells corresponding to the "row 0" to the "row 4" in the first table are 1, 2, 2, 2, and 3 respectively, and a largest quantity of cells in the quantities of cells indicated by the rows is the quantity of cells corresponding to the "row 4", which is 3. In this case, when the first DCI schedules a cell indicated by any one of the "row 0" to the "row 4" in the first table, 3-bit HARQ-ACK information is fed back.

When a second sub-codebook of the HARQ-ACK codebook includes HARQ-ACK information for PDSCHs of a plurality of cells scheduled by one piece of first DCI, a quantity of bits of the second sub-codebook of the HARQ-ACK codebook is the same as the largest quantity of cells in the quantities of cells corresponding to all the rows in the first table.

When the second sub-codebook of the HARQ-ACK codebook includes HARQ-ACK information for PDSCHs of a plurality of cells scheduled by Q pieces of first DCI, the quantity of bits of the second sub-codebook of the HARQ-ACK codebook is Q times the largest quantity of cells in the quantities of cells corresponding to all the rows in the first table, where Q is a positive integer.

It may be understood that each piece of the Q pieces of first DCI may schedule *M*₁, *M*₂...*M_{Q}* PDSCHs, where *M*₁ to *M_{Q}* are positive integers. Any two values in *M*₁ to *M_{Q}* may be the same or may be different. For example, as shown in FIG. 9, the base station sends three pieces of first DCI (first DCI 1, first DCI 2, and first DCI 3) to the terminal. PUCCHs or PUSCHs indicated for feeding back the HARQ-ACK information in the first DCI 1, the first DCI 2, and the first DCI 3 respectively are the same. That is, the terminal feeds back, to the base station in a HARQ-ACK codebook, HARQ-ACK information for PDSCHs scheduled by the first DCI 1, the first DCI 2, and the first DCI 3, and Q=3. The table 1 corresponding to the cell set 1 shown in FIG. 5 is still used as an example. The first DCI 1 schedules the cell PCell and the cell SCell 1 indicated by the "row 1", that is, the base station separately sends a PDSCH to the terminal on the PCell and SCell 1 (*M*₁ =2). The first DCI 2 schedules the cell SCell 1 and the cell SCell 2 indicated by the "row 3", that is, the base station separately sends a PDSCH to the terminal on the SCell 1 and the SCell 2 (*M*₂ =2). The first DCI 3 schedules the cell PCell, the cell SCell 1, and the cell SCell 2 indicated by the "row 4", that is, the base station separately sends a PDSCH to the terminal on the PCell, the SCell1, and the SCell2 (*M_{Q}* = *M*₃ =3). The HARQ-ACK information corresponding to the PDSCHs scheduled by the first DCI 1 is arranged before the HARQ-ACK information corresponding to the PDSCHs scheduled by the first DCI 2, and the HARQ-ACK information corresponding to the PDSCHs scheduled by the first DCI 2 is arranged before the HARQ-ACK information corresponding to the PDSCHs scheduled by the first DCI 3, where the arrangement order is determined based on values of DAIs in the first DCI 1, the first DCI 2, and the first DCI 3. For example, the first DCI 1, the first DCI 2, and the first DCI 3 are all monitored in a same PDCCH MO, the value of the DAI in the first DCI 1 is (c-DAI, t-DAI)=(1, 3), the value of the DAI in the first DCI 2 is (c-DAI, t-DAI)=(2, 3), and the value of the DAI in the first DCI 3 is (c-DAI, t-DAI)=(3, 3).

Optionally, the terminal may receive the first DCI 1, the first DCI 2, and the first DCI 3, receive the PDSCHs respectively scheduled by the first DCI 1, the first DCI 2, and the first DCI 3, and feed back, based on a decoding status of each PDSCH, the HARQ-ACK information for the PDSCHs respectively scheduled by the first DCI 1, the first DCI 2, and the first DCI 3 to the base station. In this case, the quantity of bits of the second sub-codebook of the HARQ-ACK codebook is three times the quantity of bits of HARQ-ACK information for one piece of first DCI, that is, the terminal feeds back a (3×3=9)-bit second sub-codebook to the base station. The quantity of bits of HARQ-ACK information for one piece of first DCI is the same as the largest quantity of cells in the quantities of cells corresponding to all the rows in the first table. The first table is the table 1 corresponding to the cell set 1 in FIG. 5.

Optionally, the terminal may not receive one or more pieces of the Q pieces of first DCI. In this case, the terminal may determine, based on a DCI counting method (for example, the DAI mechanism), the DCI that is not received. For example, as shown in FIG. 10, the terminal receives the first DCI 1 and the first DCI 3, but does not receive the first DCI 2. The terminal device may determine, based on the values of the DAIs in the first DCI 1 and the first DCI 3, that the base station further sends the first DCI 2 to the terminal. However, the terminal may fail to correctly receive the first DCI 2 due to a poor channel transmission environment or the another case. For example, the value of the DAI in the first DCI 1 is (c-DAI, t-DAI)=(1, 3), and the value of the DAI in the first DCI 3 is (c-DAI, t-DAI)=(3, 3), where values of the c-DAIs are inconsecutive, and 2 is missing between 1 and 3. Therefore, it can be learned that one piece of scheduling DCI for feeding back HARQ-ACK information is miss-detected. The terminal may determine, based on that the PUCCHs or the PUSCHs indicated for feeding back the HARQ-ACK information in the first DCI 1 and the first DCI 3 are the same, and based on the values of the DAIs in the first DCI 1 and the first DCI 3, that the PUCCH or the PUSCH that is configured by the base station for the first DCI 2 and indicated for feeding back the HARQ-ACK information is also the same as the PUCCHs or the PUSCHs indicated for feeding back the HARQ-ACK information in the first DCI 1 and the first DCI 3, and determine that the first DCI 2 is miss-detected. Therefore, when feeding back the PDSCHs scheduled by the first DCI 1 and the first DCI 3, the terminal feeds back the HARQ-ACK information for the PDSCHs scheduled by the first DCI 2 that is miss-detected to the base station together. In this case, the quantity of bits of the second sub-codebook of the HARQ-ACK codebook is still three times the quantity of bits of the HARQ-ACK information for one piece of first DCI, that is, the terminal feeds back a (3×3=9)-bit second sub-codebook to the base station. The quantity of bits of HARQ-ACK information for one piece of first DCI is the same as the largest quantity of cells in the quantities of cells corresponding to all the rows in the first table. The first table is the table 1 corresponding to the cell set 1 in FIG. 5.

The foregoing uses an example in which the first DCI schedules M PDSCHs, HARQ-ACK information for the PDSCHs scheduled by the Q pieces of first DCI is fed back on a same PUCCH or PUSCH, and the HARQ-ACK information for the PDSCHs scheduled by the Q pieces of first DCI forms a HARQ-ACK codebook, to describe the quantity of bits of the second sub-codebook of the HARQ-ACK codebook being Q times the largest quantity of cells in the quantities of cells corresponding to all the rows in the first table. In this case, the HARQ-ACK codebook may include only the second sub-codebook, and the quantity of bits of the HARQ-ACK codebook is equal to the quantity of bits of the second sub-codebook, and is equal to Q times the largest quantity of cells in the quantities of cells corresponding to all the rows in the first table.

In some other embodiments, HARQ-ACK information for PDSCHs scheduled by S pieces of second DCI and the HARQ-ACK information for the PDSCHs scheduled by the first DCI are fed back on a same PUCCH or PUSCH. In other words, the HARQ-ACK information for the PDSCHs scheduled by the S pieces of second DCI and the HARQ-ACK information for the PDSCHs scheduled by the Q pieces of first DCI form a HARQ-ACK codebook. The second DCI schedules one PDSCH. S is a positive integer. In this case, the HARQ-ACK codebook includes a first sub-codebook and the second sub-codebook, and a quantity of bits of the HARQ-ACK codebook is a quantity of bits of the first sub-codebook plus the quantity of bits of the second sub-codebook, that is, S plus Q times the largest quantity of cells in the quantities of cells corresponding to all the rows in the first table.

In some other embodiments, the quantity of bits of the HARQ-ACK information corresponding to the first PDCCH is equal to the largest quantity of cells multiplied by 2.

For example, when the base station configures, through an RRC parameter (for example, maxNrofCodeWordsScheduledByDCI), that a maximum quantity of codewords that can be transmitted by at least one cell in a first cell set is 2, the quantity of bits of the HARQ-ACK information corresponding to the first PDCCH is equal to the largest quantity of cells multiplied by 2.

According to the method provided in this embodiment of this application, the terminal may determine, based on the largest quantity of cells in the quantities of cells corresponding to all the rows in the first table, the quantity of bits of the HARQ-ACK codebook fed back by the terminal for the PDSCHs scheduled by the plurality of pieces of DCI corresponding to the first table when determining a quantity of pieces of corresponding DCI for which HARQ-ACK information needs to be fed back. The maximum quantity is a fixed value. When the base station indicates the terminal to feed back, in a HARQ-ACK codebook, HARQ-ACK information for the PDSCHs of the cells indicated by the plurality of pieces of DCI, the base station can determine, based on the largest quantity of cells in the quantities of cells corresponding to all the rows in the first table, that the received HARQ-ACK codebook includes HARQ-ACK information fed back for PDSCHs scheduled by several pieces of DCI, so as to learn a decoding status of the PDSCHs scheduled by the corresponding DCI, so that understandings of the HARQ-ACK codebook by the base station and the terminal are aligned.

However, if this embodiment of this application is not used, when the base station indicates the terminal to feed back, in a HARQ-ACK codebook, HARQ-ACK information for the PDSCHs of the cells indicated by the plurality of pieces of DCI, if one piece of DCI is miss-detected by the terminal, the terminal does not know how many bits of HARQ-ACK information should be filled for PDSCHs of cells indicated by the piece of DCI that is not checked. A quantity of bits filled by the terminal may differ from that understood by the base station, causing the base station to fail to receive an HARQ-ACK codebook with corresponding quantity of bits. As a result, the understandings of the codebook by the base station and the terminal cannot be aligned, leading to decoding failure at the base station. Therefore, the base station needs to resend the plurality of pieces of DCI and the PDSCHs scheduled by the plurality of pieces of DCI, causing a waste of communication resources.

Still as shown in FIG. 9, the HARQ-ACK information fed back for the PDSCHs scheduled by the first DCI 1, the HARQ-ACK information fed back for the PDSCHs scheduled by the first DCI 2, and the HARQ-ACK information fed back for the PDSCHs scheduled by the first DCI 3 all occupy 3 bits. An example in which each cell corresponds to one PDSCH is used. Assuming that the terminal receives the PDSCHs scheduled by the first DCI 1 on the PCell and the SCell 1, and successfully decodes the PDSCHs, the HARQ-ACK information fed back for the PDSCHs scheduled by the first DCI 1 may be represented as {ACK, ACK, NACK}. A padding bit position (which may be briefly referred to as a padding bit) is fixedly filled with a NACK, so that the HARQ-ACK information is padded to 3-bit information.

Similarly, the HARQ-ACK information fed back for the PDSCHs scheduled by the first DCI 2 may be represented as {ACK, NACK, NACK}, representing that the PDSCH that is on the SCell 1 indicated by the "row 3" and that is scheduled by the first DCI 2 is successfully decoded, the PDSCH on the SCell 2 is not successfully decoded, and the last NACK is a padding bit. The HARQ-ACK information fed back for the PDSCHs scheduled by the first DCI 3 may be represented as {ACK, ACK, NACK}, representing that the PDSCH that is on the PCell indicated by the "row 4" and that is scheduled by the first DCI 3 is successfully decoded, the PDSCH that is on the SCell 1 indicated by the "row 4" and that is scheduled by the first DCI 3 is successfully decoded, and the PDSCH that is on the SCell 2 indicated by the "row 4" and that is scheduled by the first DCI 3 is not successfully decoded.

According to the technical solution in this embodiment of this application, when the quantity of cells included in the cell set configured for the terminal is greater than quantity of cells indicated by any row in the table corresponding to the cell set, the terminal may use a quantity of cells in a row indicating a largest quantity of cells in the table as the quantity of bits of the HARQ-ACK information fed back by the terminal for the PDSCHs scheduled by one piece of DCI corresponding to the table, so that there is no need to use the quantity of cells included in the cell set as the quantity of bits of the HARQ-ACK information fed back by the terminal, thereby reducing the quantity of bits of the HARQ-ACK information, reducing UCI resource overheads, and improving resource utilization.

In some embodiments, the first DCI includes first indication information and second indication information, where the first indication information indicates an index of the first cell set, and the second indication information indicates an i^{th} row in the first table. The first cell set corresponds to the first table, cells indicated by each row in the first table are in the first cell set, the i^{th} row indicates L cells, the M PDSCHs are PDSCHs in the L cells, each of the L cells corresponds to at least one of the M PDSCHs, L is a positive integer less than or equal to M, and i is a positive integer.

Optionally, the index (cell set index) of the first cell set may be an identifier of the cell set. For example, an identifier of the cell set 1 is 1.

Optionally, the index of the first cell set may alternatively be an index in a cell set list. For example, the base station configures two cell sets for the terminal: the cell set 1 and a cell set 2 respectively, and the base station further configures a cell set list for the terminal device, to indicate a currently scheduled cell set through the DCI. The cell set list has two rows (entry) in total. The first row includes the cell set 1, and an index of the first row is 0. The second row includes the cell set 2, and an index of the second row is 1. The index of the first cell set may be the index (indicating the cell set 1) of the first row and/or the index of the second row (indicating the cell set 2) in the cell set list. When the first DCI is delivered to the terminal, the first DCI includes a scheduled cell set indicator field (the first indication information), and the indicator field may indicate an index of one of one or more cell sets configured by the base station for the terminal. The DCI includes a scheduled cell indicator field (the second indication information), and the indicator field indicates one of one or more rows included in the table. The table is associated with the cell set indicated by the scheduled cell set indicator field, and the base station configures an association relationship between the table and the scheduled cell set through an RRC parameter. The scheduled cell indicator field indicates scheduled cells, that is, the base station sends a plurality of PDSCHs on one or more indicated cells. After receiving the DCI, the terminal determines, based on the scheduled cell indicator field in the DCI, the cells scheduled by the DCI, that is, receives the PDSCHs on the one or more indicated cells.

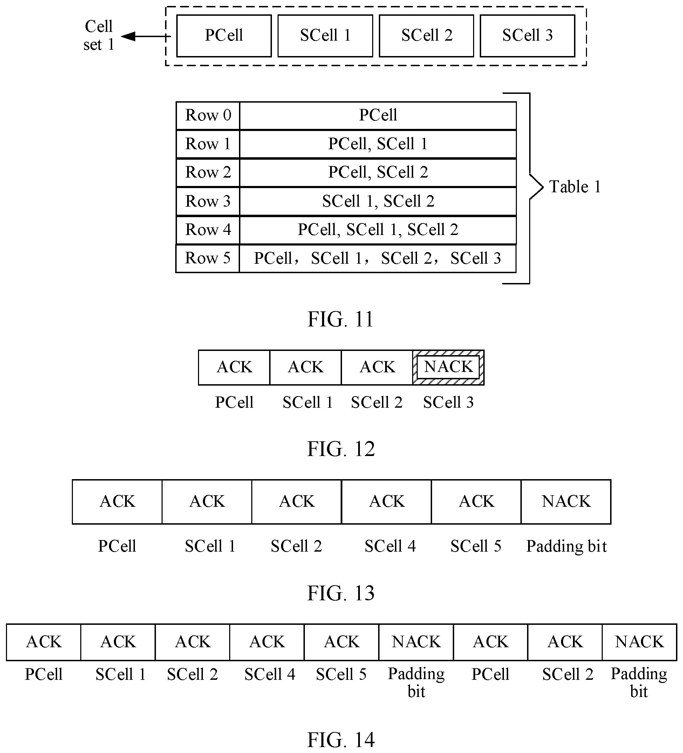

For example, the first indication information and the second indication information indicate a "row 4" in a cell set 1 shown in FIG. 11. The first indication information indicates that the cell set is the cell set 1, and the second indication information indicates the "row 4". Optionally, the first indication information includes an index of the first cell set, and the second indication information includes an index of a row in the first table. For example, the base station configures two cell sets for UE: the cell set 1 (as shown in FIG. 11) and a cell set 2 respectively. The first indication information may be implemented as 1 bit, and is indicated as "0", that is, indicating the cell set 1. There are six rows in a table corresponding to the cell set 1, and the second indication information may be implemented as four bits, and is indicated as "100", that is, indicating a fifth row (the "row 4" in the table 1 shown in FIG. 11). The terminal may obtain, based on the first indication information and the second indication information in the first DCI, the first cell set, and the table corresponding to the first cell set, that the scheduled cells are {PCell, SCell 1, and SCell 2}.

In some embodiments, when a quantity of cells indicated by the second indication information is less than a largest quantity of cells, a bit in the bits of the HARQ-ACK information corresponding to the first PDCCH other than bits of HARQ-ACK information corresponding to the M PDSCHs is set to a negative acknowledgment NACK.

For example, the cell set 1 shown in FIG. 11 is used as an example. In the first table (the table 1), a row corresponding to the largest quantity of cells is a "row 5", and a quantity of cells corresponding to the "row 5" is 4. When the quantity of cells indicated by the second indication information is less than 4, that is, when the row indicated by the second indication information is one of a "row 0" to the "row 4", there is a bit in bits of HARQ-ACK information for PDSCHs in this row other than bits of HARQ-ACK information corresponding to the cells indicated by the second indication information. Refer to FIG. 12. An example in which the row indicated by the second indication information is the "row 4" is used. The cells indicated by the "row 4" are {PCell, SCell 1, SCell 2}, M=3, and a SCell 3 is not included. Cells sent by the base station to the terminal include only {PCell, SCell 1, SCell 2}, and the first DCI indicates PDSCHs carried on the cells {PCell, SCell 1, SCell 2}. The terminal does not receive the SCell 3. In this case, in the HARQ-ACK information fed back by the terminal for the PDSCHs that are carried on the cells and that are scheduled by the first DCI, the fourth bit may be set to a negative acknowledgment NACK.

For example, after receiving the PDSCHs carried on {PCell, SCell 1, SCell 2} and successfully decoding a data block carried on each cell, the terminal may feed back a HARQ-ACK codebook {ACK, ACK, ACK, NACK}. For another example, after receiving the PDSCHs carried on {PCell, SCell 1, SCell 2}, successfully decoding data blocks carried on the PCell and the SCell 1, but failing to decode a data block carried on the SCell 2, the terminal may feed back a HARQ-ACK codebook {ACK, ACK, NACK, NACK}.

An embodiment of this application further provides a method for feeding back and receiving HARQ-ACK information. In this method, a plurality of cell sets are configured for the terminal, the base station may send a plurality of pieces of DCI to the terminal, and each piece of DCI may be used to schedule cells in different cell sets. The method for feeding back and receiving HARQ-ACK information provided in this embodiment of this application further includes S800.

S800. The base station sends configuration information. Correspondingly, the terminal receives the configuration information.

The configuration information indicates cells included in the first cell set. The configuration information further indicates cells included in a second cell set, the second cell set corresponds to a second table, and cells indicated by each row in the second table are in the second cell set. Each row in the second table indicates the cells scheduled in one time of scheduling of the DCI in the DCI format.

The base station configures the first cell set for the terminal device through an RRC parameter (for example, MC-DCI-SetofCells). For example, the base station configures, for the terminal device through MC-DCI-SetofCells, information such as the cells included in the first cell set and/or the index of the first cell set. For example, refer to FIG. 5. The base station configures the cell set 1 for the terminal device, and the cell set 1 includes identifiers of the four cells or cell indexes of the four cells. The four cells are respectively a primary cell, a secondary cell 1, a secondary cell 2, and a secondary cell 3, that is, cell set#1={PCell, SCell 1, SCell 2, SCell 3}, or cell set #1={0, 1, 2, 3}. The base station configures an index or an identifier of the cell set 1 to 1 through an RRC parameter (for example, SetofCellsId).

The terminal device may determine, based on the configuration information, the cells included in the first cell set and the cells included in the second cell set.

In some embodiments, the quantity of bits of the HARQ-ACK information corresponding to the first PDCCH is equal to a first value or is equal to the first value multiplied by 2, where the first value is a larger value of the largest quantity of cells in the quantities of cells corresponding to all the rows in the first table and a largest quantity of cells in quantities of cells corresponding to all the rows in the second table.

For example, the configuration information may indicate the cell set 1 (the first cell set) shown in FIG. 5, and indicate the cell set 2 (the second cell set) shown in FIG. 6. The cell set 1 corresponds to the table 1, and the cells indicated by all the rows in the table 1 are the cells in the cell set 1. The cell set 2 corresponds to the table 2, and the cells indicated by all the rows in the table 2 are the cells in the cell set 2. In the table 1, a row corresponding to a largest quantity of cells is the "row 4", and a quantity of cells corresponding to the "row 4" is 3. That is, in all the rows in the table 1, the quantity of cells corresponding to the row corresponding to the largest quantity of cells is 3. In the table 2, a row corresponding to a largest quantity of cells is a "row 2", and a quantity of cells corresponding to the "row 2" is 2. That is, in all the rows in the table 2, the quantity of cells corresponding to the row corresponding to the largest quantity of cells is 2. In the tables corresponding to the cell sets configured for the terminal device, the quantity of cells corresponding to the "row 4" in the table 1 is greater than the quantity of cells corresponding to the "row 2" in the table 2. In this case, a larger value of the quantity of cells corresponding to the "row 4" in the table 1 and the quantity of cells corresponding to the "row 2" in the table 2 is the quantity of cells corresponding to the "row 4" in the table 1, which is 3. That is, the first value is 3. It is determined that the quantity of bits of the HARQ-ACK information corresponding to the first PDCCH is 3 or 6. For example, when the maximum quantity of codewords that can be transmitted by each cell in the cell set 1 is 1, the quantity of bits of the HARQ-ACK information corresponding to the first PDCCH is equal to 3. For another example, when the maximum quantity of codewords that can be transmitted by at least one cell in the cell set 1 is 2, the quantity of bits of the HARQ-ACK information corresponding to the first PDCCH is equal to 6.

For another example, the quantity of bits of the HARQ-ACK information corresponding to the first PDCCH may be determined based on the largest quantity of cells in the quantities of cells corresponding to all the rows in the first table and the second table. Refer to FIG. 5 and FIG. 6. The first table and the second table include eight rows in total. In the eight rows, the quantity of cells corresponding to the "row 4" in the first table is 3, and the quantity of cells corresponding to the row is the largest quantity of cells in the quantities of cells corresponding to all the rows in the first table and the second table. Therefore, it is determined that the first value is 3. Refer to the foregoing example. The quantity of bits of the HARQ-ACK information corresponding to the first PDCCH is equal to 3 or 6.

According to the method provided in embodiments of this application, when the terminal sends, to the base station, the HARQ-ACK information fed back for the PDSCHs scheduled by the DCI for scheduling cells in different cell sets, a same quantity of bits may be reserved in the HARQ-ACK codebook for the HARQ-ACK information fed back for the PDSCHs scheduled by each piece of DCI. Therefore, even if the DCI is miss-detected, a fixed location is reserved in the HARQ-ACK codebook for the DCI that is miss-detected, so that understandings of the HARQ-ACK codebook by the base station and the terminal are aligned.

S800 in this embodiment of this application may be performed before S801 in the foregoing embodiment.

The foregoing describes the method in this embodiment of this application by using an example in which the configuration information indicates two cell sets. It may be understood that the configuration information in this embodiment of this application may further indicate more cell sets, for example, a third cell set (for example, a cell set 3) and a fourth cell set (for example, a cell set 4). The cell set 3 and the cell set 4 may respectively correspond to a third table and a fourth table. In this case, the configuration information may further indicate cells included in the cell set 3 and cells included in the cell set 4. The quantity of bits of the HARQ-ACK information corresponding to the first PDCCH may be determined based on a largest value of largest quantities of cells in quantities of cells corresponding to all rows in all of the first table to the fourth table.

In some embodiments, a row in the first table indicates all cells in the first cell set.

For example, refer to FIG. 11. The table 1 includes a "row 5", and cells indicated by the "row 5" are all the cells included in the cell set 1. When the table 1 configured by the base station for the terminal includes all the cells in the cell set 1, and when the first DCI schedules the cells indicated by the "row 5", that is, schedules all the cells in the cell set, the base station can schedule all the cells in the cell set based on a capability of co-scheduling cells that are configured for the terminal, so that each configured cell can be invoked, thereby reducing a waste of cell resources.

In some embodiments, locations of HARQ-ACK information corresponding to the M PDSCHs in the HARQ-ACK codebook are sorted in ascending order based on a cell index of a cell corresponding to each of the M PDSCHs.

For example, when the DCI schedules the cells (the PCell, the SCell 1, and the SCell 2) indicated by the "row 4" in the table 1 shown in FIG. 11, M=3, and HARQ-ACK information for PDSCHs transmitted on the cells indicated by the "row 4" is sorted based on cell indexes of the cells in which the PDSCHs are located. As shown in FIG. 12, a cell index of the PCell, a cell index of the SCell 1, and a cell index of the SCell 2 increase sequentially, and the HARQ-ACK information fed back for the PDSCHs carried on the PCell, the SCell 1, and the SCell 2 is sorted sequentially from front to back.

In some embodiments, HARQ-ACK information corresponding to cells scheduled by a plurality of pieces of first DCI is fed back in one HARQ-ACK codebook. The HARQ-ACK information corresponding to the cells scheduled by the plurality of pieces of first DCI in the HARQ-ACK codebook is sorted based on values of DAIs in the plurality of pieces of first DCI.

For example, the first table configured for the terminal includes the table 1 in FIG. 5 and the table 2 in FIG. 6. The plurality of pieces of DCI that are fed back in a same HARQ-ACK codebook and that are sent by the base station to the terminal are first DCI 4 and first DCI 5. The first DCI 4 schedules the "row 4" in the table 1 shown in FIG. 5, and the first DCI 5 schedules the "row 2" in the table 2 shown in FIG. 6. A DAI in the first DCI 4 is (c-DAI, t-DAI)=(1, 2), and a DAI in the first DCI 5 is (c-DAI, t-DAI)=(2, 2). The terminal may determine that the HARQ-ACK information fed back for the PDSCHs carried on the cells (the PCell, the SCell 1, and the SCell 2) in the cell set 1 is located before the HARQ-ACK information fed back for the PDSCHs carried on the cells (the SCell 4 and the SCell 5) in the cell set 2. In addition, the HARQ-ACK information corresponding to the cells in the cell set 1 is sorted in ascending order based on the cell indexes, and the HARQ-ACK information corresponding to the cells in the cell set 2 is sorted in ascending order based on cell indexes, thereby determining a HARQ-ACK codebook shown in FIG. 13 and fed back by the terminal for PDSCHs scheduled by the first DCI 4 and the first DCI 5 In this embodiment, a quantity of cells corresponding to a row corresponding to the largest quantity of cells in the first table and the second table that are configured for the terminal is 3. HARQ-ACK information fed back for the PDSCHs scheduled by the first DCI 4 and the first DCI 5 each occupies 3 bits. Refer to FIG. 13. The first DCI 5 schedules only two cells. When the terminal device feeds back the HARQ-ACK information corresponding to the PDSCHs scheduled by the first DCI 5, one bit may be added, so that the base station and the terminal have a consistent understanding of a size of the HARQ-ACK codebook when one or more pieces of DCI are miss-detected, thereby improving data transmission robustness.

In some embodiments, HARQ-ACK information corresponding to cells scheduled by a plurality of pieces of first DCI is fed back in one HARQ-ACK codebook, and in the plurality of pieces of first DCI, at least two pieces of first DCI have a same cell index of cells in which PDSCHs scheduled by the first DCI are located. The HARQ-ACK information in the HARQ-ACK codebook is sorted based on the values of the DAIs in the first DCI. The HARQ-ACK information for PDSCHs scheduled by each piece of first DCI is sorted based on cell indexes of cells corresponding to the PDSCHs. For example, the table configured for the terminal includes the table 1 in FIG. 5 and the table 2 in FIG. 6, and the plurality of pieces of DCI that are sent by the base station to the terminal and that are fed back in a same HARQ-ACK codebook include first DCI 6, first DCI 7, and first DCI 8. The first DCI 6 indicates the "row 4" in the table 1 shown in FIG. 5, and a DAI in the first DCI 6 is (c-DAI, t-DAI)=(1, 3). The first DCI 7 indicates the "row 2" in the table 2 shown in FIG. 6, and a DAI in the first DCI 7 is (c-DAI, t-DAI)=(2, 3). The first DCI 8 indicates the "row 2" in the table 1 shown in FIG. 5, and a DAI in the first DCI 8 is (c-DAI, t-DAI)=(3, 3).

According to the DAIs respectively corresponding to the first DCI 6, the first DCI 7, and the first DCI 8, HARQ-ACK information fed back for PDSCHs carried on cells in cell sets indicated by the first DCI 6, the first DCI 7, and the first DCI 8 is sequentially sorted. HARQ-ACK information for PDSCHs respectively carried on the cells (the PCell, the SCell 1, and the SCell 2) indicated by the first DCI 6 is sorted based on cell indexes, HARQ-ACK information for PDSCHs respectively carried on the cells (the SCell 4 and the SCell 5) indicated by the first DCI 7 is sorted based on cell indexes, and HARQ-ACK information for PDSCHs respectively carried on the cells (the PCell and the SCell 2) indicated by the first DCI 8 is sorted based on cell indexes. Therefore, a HARQ-ACK codebook shown in FIG. 14 that is fed back by the terminal for PDSCHs scheduled by the first DCI 6, the first DCI 7, and the first DCI 8 is obtained.

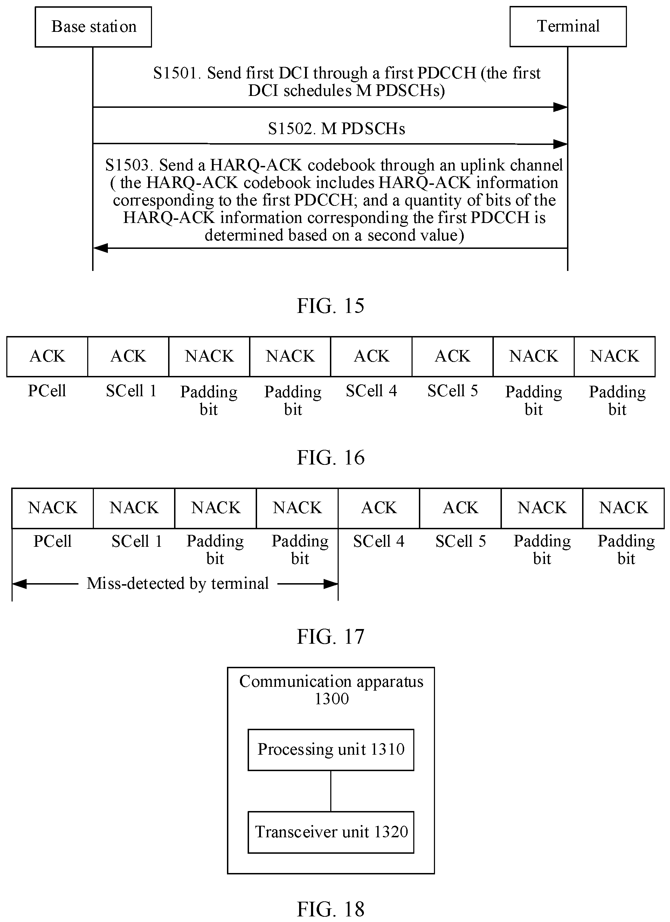

An embodiment of this application further provides a method for feeding back HARQ-ACK information. In this method, a plurality of cell sets are configured for a terminal. For example, a first cell set and a second cell set are configured for the terminal. Refer to FIG. 15. The method for feeding back HARQ-ACK information provided in this embodiment of this application includes the following steps.

S1501. A base station sends first DCI through a first PDCCH. Correspondingly, the terminal receives the first DCI through the first PDCCH.

The first DCI schedules M PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N. M is a quantity of PDSCHs that are actually scheduled by the first DCI, N is a quantity of cells that can be scheduled by the first DCI, and K is a quantity of PDSCHs that can be scheduled by the first DCI.

For a specific implementation of S1501, refer to the descriptions corresponding to S801. Details are not described herein again.

S1502. The base station sends the M PDSCHs. Correspondingly, the terminal receives the M PDSCHs.

It may be understood that, in some embodiments, the terminal may not receive the M PDSCHs, or the terminal may receive R PDSCHs, where R is a positive integer less than M.

S1503. The terminal sends a HARQ-ACK codebook through an uplink channel. Correspondingly, the base station receives the HARQ-ACK codebook through the uplink channel.

The HARQ-ACK codebook includes HARQ-ACK information corresponding to the first PDCCH, where a quantity of bits of the HARQ-ACK information corresponding to the first PDCCH is determined based on a second value, the second value is a larger value of a quantity of cells in a first cell set and a quantity of cells in a second cell set, and cells scheduled in one time of scheduling of DCI in the DCI format are the cells in the first cell set or the cells in the second cell set.

For example, the first cell set may be the cell set 1 shown in FIG. 5, and the quantity of cells in the cell set 1 is 4. The second cell set may be the cell set 2 shown in FIG. 6, and the quantity of cells in the cell set 2 is 2. The base station may configure the cell set 1 and the cell set 2 for the terminal, and schedule one or more cells in the cell set 1 at a time through the first DCI, or schedule one or more cells in the cell set 2 at a time through the first DCI. For example, refer to FIG. 5. First DCI 9 may schedule the cell PCell and the cell SCell 1 indicated by the "row 2" in the table 1 corresponding to the cell set 1. Refer to FIG. 6. First DCI 10 may schedule the cell SCell 4 and the cell SCell 5 indicated by the "row 2" in the table 2 corresponding to the cell set 2. For another example, the cell set 1 may correspond to the table 1 shown in FIG. 11. Refer to FIG. 11. First DCI 11 may schedule the cell PCell, the cell SCell 1, the cell SCell 2, and the cell SCell 3 indicated by the "row 5" in the table 1 corresponding to the cell set 1. When the table corresponding to the cell set includes all cells in the cell set, the first DCI may schedule all the cells in the cell set.

The quantity 4 of cells in the cell set 1 is greater than the quantity 2 of cells in the cell set 2, so that the second value may be 4.

In some embodiments, the quantity of bits of the HARQ-ACK information corresponding to the first PDCCH is equal to the second value or is equal to the second value multiplied by 2.

For example, when the base station configures, through an RRC parameter (for example, maxNrofCodeWordsScheduledByDCI), that a maximum quantity of codewords (codewords) that can be transmitted by each cell in the plurality of cell sets of the terminal is 1, the quantity of bits of the HARQ-ACK information corresponding to the first PDCCH is equal to the second value.

For example, the first DCI 9 schedules the PCell and the SCell 1, M=2, and the quantity of bits of the HARQ-ACK information that corresponds to the first PDCCH and that is fed back for PDSCHs carried on the PCell and PDSCHs carried on the SCell 1 may be 4. The first DCI 10 schedules the SCell 4 and the SCell 5, M=2, and the quantity of bits of the HARQ-ACK information that corresponds to the first PDCCH and that is fed back for PDSCHs carried on the SCell 4 and PDSCHs carried on the SCell 5 is also 4.

It is assumed that the base station indicates the terminal to feed back, on a same PUSCH or PUCCH, the HARQ-ACK information for the PDSCHs respectively scheduled by the first DCI 9 and the first DCI 10. A DAI in the first DCI 9 is (c-DAI, t-DAI)=(1, 2), and a DAI in the first DCI 10 is (c-DAI, t-DAI)=(2, 2). For example, as shown in FIG. 16, the terminal receives the PDSCHs scheduled by the first DCI 9 and the first DCI 10, and feeds back, based on a value of the DAI in the first DCI 9 and a value of the DAI in the first DCI 10, the HARQ-ACK information corresponding to the PDSCHs scheduled by the first DCI 9 and the HARQ-ACK information corresponding to the PDSCHs scheduled by the first DCI 10, namely, {ACK, ACK, NACK, NACK, ACK, ACK, NACK, NACK}.

For another example, as shown in FIG. 17, when the terminal receives the first DCI 10 and miss-detects the first DCI 9, the terminal determines, based on the value (c-DAI, t-DAI)=(2, 2) of the DAI in the first DCI 10, that the terminal miss-detects the first DCI 9. If the PDSCHs scheduled by the first DCI 10 are successfully decoded, the terminal may feed back the HARQ-ACK information corresponding to the PDSCHs scheduled by the first DCI 9 and the HARQ-ACK information corresponding to the PDSCHs scheduled by the first DCI 10, namely, {NACK, NACK, NACK, NACK, ACK, ACK, NACK, NACK}.

For another example, when the base station configures, through an RRC parameter (for example, maxNrofCodeWordsScheduledByDCI), that a maximum quantity of codewords (codewords) that can be transmitted by at least one cell in the plurality of cell sets of the terminal is 2, the quantity of bits of the HARQ-ACK information corresponding to the first PDCCH is equal to the second value 2 multiplied by 2.

For example, the first DCI 9 schedules the PCell and the SCell 1, M=2, and the quantity of bits of the HARQ-ACK information that corresponds to the first PDCCH and that is fed back for PDSCHs carried on the PCell and PDSCHs carried on the SCell 1 may be 8. The first DCI 10 schedules the SCell 4 and the SCell 5, M=2, and the quantity of bits of the HARQ-ACK information that corresponds to the first PDCCH and that is fed back for PDSCHs carried on the SCell 4 and PDSCHs carried on the SCell 5 is also 8.

In the foregoing example, the quantity of cells in the cell set 1 is different from the quantity of cells in the cell set 2, but the quantity of bits of the HARQ-ACK information for the PDSCHs carried on the cells in the cell set 2 is the same as the quantity of bits of the HARQ-ACK information for the PDSCHs carried on the cells in the cell set 1. Therefore, when the base station sends a plurality of pieces of first DCI to the terminal, regardless of which piece of first DCI indicating a cell in a cell set is miss-detected, the terminal reserves a same bit position for HARQ-ACK information corresponding to PDSCHs scheduled by the DCI that is miss-detected, so that when decoding each HARQ-ACK information bit position, the base station can determine a meaning corresponding to the bit position. Therefore, understandings of the HARQ-ACK information by the base station and the terminal are aligned.

In some embodiments, the first DCI includes first indication information and second indication information, where the first indication information indicates an index of the first cell set, the second indication information indicates L cells in the first cell set, the M PDSCHs are PDSCHs in the L cells, each of the L cells corresponds to at least one of the M PDSCHs, and L is a positive integer less than or equal to M.

For example, refer to the foregoing embodiments. The first cell set corresponds to the first table, the second indication information indicates the i^{th} row in the table, and i is a positive integer.

It may be understood that, in the foregoing example, an example in which the plurality of cell sets configured for the terminal are the cell set 1 and the cell set 2 is used to describe the quantity of bits of the HARQ-ACK information corresponding to the first PDCCH. In some other embodiments, more cell sets may be configured for the terminal, for example, a cell set 3 and a cell set 4 are configured. In this case, the terminal and the base station may determine, based on a quantity of cells in the more cell sets configured for the terminal, the quantity of bits of the HARQ-ACK information corresponding to the first PDCCH. For example, in all cell sets configured for the terminal, a quantity of cells (which may also be referred to as a largest cell quantity) in a cell set that includes a largest quantity of cells is used as the quantity of bits of the HARQ-ACK information corresponding to the first PDCCH.

In some embodiments, as shown in FIG. 16 and FIG. 17, locations of HARQ-ACK information corresponding to the M PDSCHs in the HARQ-ACK codebook are sorted in ascending order based on a cell index of a cell corresponding to each of the M PDSCHs.

In some embodiments, when L is less than the second value, a bit in the bits of the HARQ-ACK information corresponding to the first PDCCH other than bits of the HARQ-ACK information corresponding to the M PDSCHs is set to a negative acknowledgment NACK.

For example, the sets configured for the terminal are the cell set 1 shown in FIG. 5 and the cell set 2 shown in FIG. 6. The quantity 4 of cells in the first cell set is a larger value in the cell sets, and the second value is 4. When a quantity of the cells indicated by the second indication information in the first DCI 9 or the first DCI 10 is less than four (that is, L is less than 4), refer to FIG. 16. For example, the first indication information in the first DCI 9 indicates the cell set 1, the second indication information indicates the "row 2", and the "row 2" indicate the cell PCell and the cell SCell 1. For the 4-bit HARQ-ACK information for the PDSCHs carried on the PCell and the SCell 1, two bits of the HARQ-ACK information are used as padding bits, and both the two padding bits of the HARQ-ACK information are set to a negative acknowledgment NACK. Therefore, if the terminal successfully decodes the PDSCHs carried on the PCell and the SCell 1, bits of the 4-bit HARQ-ACK information for the PDSCHs scheduled by the first DCI 9 are represented as {ACK, ACK, NACK, NACK} . Similarly, bits of the 4-bit HARQ-ACK information for the PDSCHs scheduled by the first DCI 10 may also be represented as {ACK, ACK, NACK, NACK}. Therefore, the HARQ-ACK codebook fed back by the terminal to the base station on the uplink channel may be represented as {ACK, ACK, NACK, NACK, ACK, ACK, NACK, NACK}.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

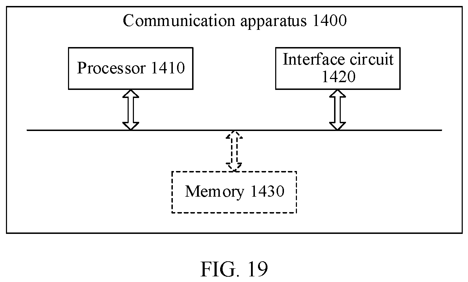

FIG. 18 and FIG. 19 are diagrams of possible structures of communication apparatuses according to embodiments of this application. These communication apparatuses may be configured to implement functions of the terminal or the base station in the foregoing method embodiments, and therefore can also implement beneficial effects of the foregoing method embodiments. In an embodiment of this application, the communication apparatus may be the terminal 120 in FIG. 1, or may be the base station 110 shown in FIG. 1, or may be a module (for example, a chip) used in a terminal or a base station.

As shown in FIG. 18, a communication apparatus 1300 includes a processing unit 1310 and a transceiver unit 1320. The communication apparatus 1300 is configured to implement the functions of the terminal or the base station in the method embodiment shown in FIG. 8 or FIG. 15.

When the communication apparatus 1300 is configured to implement the functions of the terminal in the method embodiment shown in FIG. 8, the transceiver unit 1320 is configured to receive first DCI, receive M PDSCHs, send a HARQ-ACK codebook through an uplink channel, and receive configuration information, and the processing unit 1310 is configured to perform a processing-related function.

When the communication apparatus 1300 is configured to implement the functions of the base station in the method embodiment shown in FIG. 8, the transceiver unit 1320 is configured to send first DCI, send M PDSCHs, receive a HARQ-ACK codebook through an uplink channel, and receive configuration information, and the processing unit 1310 is configured to perform a processing-related function.

When the communication apparatus 1300 is configured to implement the functions of the terminal in the method embodiment shown in FIG. 15, the transceiver unit 1320 is configured to receive first DCI, receive M PDSCHs, and send a HARQ-ACK codebook through an uplink channel, and the processing unit 1310 is configured to perform a processing-related function.

When the communication apparatus 1300 is configured to implement the functions of the base station in the method embodiment shown in FIG. 15, the transceiver unit 1320 is configured to send first DCI, send M PDSCHs, and receive a HARQ-ACK codebook through an uplink channel, and the processing unit 1310 is configured to perform a processing-related function. For more detailed descriptions of the processing unit 1310 and the transceiver unit 1320, refer to related descriptions in the method embodiments shown in FIG. 8 and FIG. 15.

As shown in FIG. 19, a communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions that are executed by the processor 1410, store input data required for running instructions by the processor 1410, or store data generated by the processor 1410 running instructions.

When the communication apparatus 1400 is configured to implement the method shown in FIG. 8, the processor 1410 is configured to implement the functions of the processing unit 1310, and the interface circuit 1420 is configured to implement the functions of the transceiver unit 1320.

When the communication apparatus is a chip used in a terminal, the chip in the terminal implements the functions of the terminal in the foregoing method embodiments. That the chip in the terminal receives information from a base station may be understood as that the information is first received by another module (for example, a radio frequency module or an antenna) in the terminal, and then sent by the another module to the chip in the terminal. That the chip in the terminal sends information to a base station may be understood as that the information is first sent to another module (for example, a radio frequency module or an antenna) in the terminal, and then sent to the base station by the another module.

When the communication apparatus is a chip used in a base station, the chip in the base station implements the functions of the base station in the foregoing method embodiments. That the chip in the base station receives information from a terminal may be understood as that the information is first received by another module (for example, a radio frequency module or an antenna) in the base station, and then sent by the another module to the chip in the base station. That the chip in the base station sends information to a terminal may be understood as that the information is first sent to another module (for example, a radio frequency module or an antenna) in the base station, and then sent to the terminal by the another module.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be arranged in an ASIC. In addition, the ASIC may be located in a base station or a terminal. Certainly, the processor and the storage medium may exist in a base station or terminal as discrete components.

All or some of the foregoing embodiments may be implemented through software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method for feeding back HARQ-ACK information, comprising:
receiving first downlink control information DCI through a first physical downlink control channel PDCCH, wherein the first DCI schedules M physical downlink shared channels PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N;
receiving the M PDSCHs; and
sending a hybrid automatic repeat request-acknowledgment HARQ-ACK codebook through an uplink channel, wherein the HARQ-ACK codebook comprises HARQ-ACK information corresponding to the first PDCCH, a quantity of bits of the HARQ-ACK information corresponding to the first PDCCH is determined based on a largest quantity of cells in quantities of cells corresponding to all rows in a first table, and each row in the first table indicates cells scheduled in one time of scheduling of DCI in the DCI format.

2. The method according to claim 1, wherein the first DCI comprises first indication information and second indication information, the first indication information indicates an index of a first cell set, the second indication information indicates an i^{th} row in the first table, the first cell set corresponds to the first table, the cells indicated by each row in the first table are in the first cell set, the i^{th} row indicates L cells, the M PDSCHs are PDSCHs in the L cells, each of the L cells corresponds to at least one of the M PDSCHs, L is a positive integer less than or equal to M, and i is a positive integer.

3. The method according to claim 2, wherein the quantity of bits of the HARQ-ACK information corresponding to the first PDCCH is the same as the largest quantity of cells, or the quantity of bits of the HARQ-ACK information corresponding to the first PDCCH is equal to the largest quantity of cells multiplied by 2.

4. The method according to claim 3, wherein when a quantity of cells indicated by the second indication information is less than the largest quantity of cells, a bit in the bits of the HARQ-ACK information corresponding to the first PDCCH other than bits of HARQ-ACK information corresponding to the M PDSCHs is set to a negative acknowledgment NACK.

5. The method according to any one of claims 1 to 4, wherein locations of the HARQ-ACK information corresponding to the M PDSCHs in the HARQ-ACK codebook are sorted in ascending order based on a cell index of a cell corresponding to each of the M PDSCHs.

6. The method according to any one of claims 1 to 5, wherein a row in the first table indicates all cells in the first cell set.

7. The method according to any one of claims 1 to 6, wherein the method further comprises:
receiving configuration information, wherein the configuration information indicates cells comprised in the first cell set, the configuration information further indicates cells comprised in a second cell set, the second cell set corresponds to a second table, and cells indicated by each row in the second table are in the second cell set; and
the quantity of bits of the HARQ-ACK information corresponding to the first PDCCH is equal to a first value or is equal to the first value multiplied by 2, wherein the first value is a larger value of the largest quantity of cells in the quantities of cells corresponding to all the rows in the first table and a largest quantity of cells in quantities of cells corresponding to all the rows in the second table.

8. A method for receiving HARQ-ACK information, comprising:
sending first downlink control information DCI through a first physical downlink control channel PDCCH, wherein the first DCI schedules M physical downlink shared channels PDSCHs, a format of the first DCI is a DCI format for scheduling K PDSCHs of N cells, each of the N cells corresponds to at least one of the K PDSCHs, M is a positive integer, N and K are integers greater than 1, and K is greater than or equal to N;
sending the M PDSCHs; and
receiving a hybrid automatic repeat request-acknowledgment HARQ-ACK codebook through an uplink channel, wherein the HARQ-ACK codebook comprises HARQ-ACK information corresponding to the first PDCCH, a quantity of bits of the HARQ-ACK information corresponding to the first PDCCH is determined based on a largest quantity of cells in quantities of cells corresponding to all rows in a first table, and each row in the first table indicates cells scheduled in one time of scheduling of DCI in the DCI format.

9. The method according to claim 8, wherein the first DCI comprises first indication information and second indication information, the first indication information indicates an index of a first cell set, the second indication information indicates an i^{th} row in the first table, the first cell set corresponds to the first table, the cells indicated by each row in the first table are in the first cell set, the i^{th} row indicates L cells, the M PDSCHs are PDSCHs in the L cells, each of the L cells corresponds to at least one of the M PDSCHs, L is a positive integer less than or equal to M, and i is a positive integer.

10. The method according to claim 9, wherein the quantity of bits of the HARQ-ACK information corresponding to the first PDCCH is the same as the largest quantity of cells, or the quantity of bits of the HARQ-ACK information corresponding to the first PDCCH is equal to the largest quantity of cells multiplied by 2.

11. The method according to claim 10, wherein when a quantity of cells indicated by the second indication information is less than the largest quantity of cells, a bit in the bits of the HARQ-ACK information corresponding to the first PDCCH other than bits of HARQ-ACK information corresponding to the M PDSCHs is set to a negative acknowledgment NACK.

12. The method according to any one of claims 8 to 11, wherein locations of the HARQ-ACK information corresponding to the M PDSCHs in the HARQ-ACK codebook are sorted in ascending order based on a cell index of a cell corresponding to each of the M PDSCHs.

13. The method according to any one of claims 8 to 12, wherein a row in the first table indicates all cells in the first cell set.

14. The method according to any one of claims 8 to 13, wherein the method further comprises:
sending configuration information, wherein the configuration information indicates cells comprised in the first cell set, the configuration information further indicates cells comprised in a second cell set, the second cell set corresponds to a second table, and cells indicated by each row in the second table are in the second cell set; and
the quantity of bits of the HARQ-ACK information corresponding to the first PDCCH is equal to a first value or is equal to the first value multiplied by 2, wherein the first value is a larger value of the largest quantity of cells in the quantities of cells corresponding to all the rows in the first table and a largest quantity of cells in quantities of cells corresponding to all the rows in the second table.

15. A computer-readable storage medium, wherein the computer-readable storage medium stores instructions; and when the instructions are run on a communication apparatus, the communication apparatus is caused to perform the method according to any one of claims 1 to 7, or the communication apparatus is caused to perform the method according to any one of claims 8 to 14.

16. A communication apparatus, comprising a module configured to perform the method according to any one of claims 1 to 7, or a module configured to perform the method according to any one of claims 8 to 14.

17. A computer program product, wherein the computer program product comprises instructions for performing the method according to any one of claims 1 to 7, or the computer program product comprises instructions for performing the method according to any one of claims 8 to 14.
